# EUROPEAN PATENT SPECIFICATION

(11) **EP 4 217 553 B1**
(45) Date of publication and mention of the grant of the patent: **18.12.2024**
(21) Application number: 21778431.3
(22) Date of filing: 17.09.2021
(51) Int. Cl.: E04G 23/02, C09J 4/00, C09J 11/00, B65D 83/00, B05C 17/005

(54) **METHOD AND APPARATUS TO RESET A FLOOR**
VERFAHREN UND VORRICHTUNG ZUM ZURÜCKSETZEN EINES BODENS
PROCÉDÉ ET APPAREIL DE RÉINITIALISATION D'UN PLANCHER

(30) Priority: 23.09.2020 DK PA202001073; 09.04.2021 DK PA202100357
(43) Date of publication of application: 02.08.2023
(73) Proprietor: Hydro Inject ApS, 6000 Kolding (DK)
(72) Inventor: MIKKELSEN, Anders Peter, 6000 Kolding (DK)
(74) Representative: Larsen & Birkeholm A/S
(86) International application number: PCT/EP2021/075676
(87) International publication number: WO 2022/063703

(56) References cited:
- JP-B2- 6 154 432
- US-A- 5 000 890
- US-A1- 2015 158 050
- US-B1- 9 151 066

## Description

### Field of the Invention

The present invention relates to the field of repair tools for floors.

### Background of the Invention

Traditional methods for repairing a floor where the flooring material has become separated from the subfloor, such as a concrete slab, usually involve removing the flooring material from the subfloor and cleaning both the subfloor and the flooring material, and then reinstalling the flooring material. In some situations, the flooring material cannot be reinstalled, which then requires finding matching replacement flooring material or replacing all of the flooring material.

Twistfix^{®} Crack Sealer Plus is a two-part thixotropic epoxy adhesive. It may be used in film thicknesses between 0.2 mm and 12 mm. Twistfix^{®} Crack Sealer Plus is specifically formulated for repairing fine cracks in brick, block, stone, concrete or masonry. However, this type is unsuitable for use for repairing a tile floor or wall that sounds hollow as it is too thin flowing and has poor adhesion to the tile and flooring. Thus, this method suffers from inadequate filling of the void between the subfloor and the flooring material. Hence, using such a system would not solve the problem of removing the hollow sound. Furthermore, the needle system is developed for an adhesive resin that has a viscosity of less than 50 mPa*s when measured at 20° Celsius at a shear rate of 100 second⁻¹ as the needle tip would otherwise be fired away from the cartridge. Additionally, it requires proper ventilation during application, and it must be mixed prior to use and manually loaded into the cartridge.

More recent methods for repairing a floor where the flooring material has become separated from the subfloor include delivering an adhesive between the flooring material and the subfloor via a hole drilled in the floor while leaving the flooring material in place. The adhesive is then allowed to set, thereby adhering the flooring material to the subfloor. A method like this is disclosed in US9151066. However, this method suffers from inadequate filling of the void between the subfloor and the flooring material. The flooring may be fastened to a certain extent, but the flooring will still sound hollow, especially when the flooring material comprises large tiles with a width of more than 20 cm. Another method and apparatus for repairing a portion of a floor is disclosed in US 5000 890 A.

### Object of the Invention

The objective of the present invention is therefore to provide a method for repairing a tile floor that sounds hollow, and an apparatus for such a method.

### Description of the Invention

A first aspect according to claim 1 relates to a method for repairing a portion of a floor where one or more tiles have become separated from a subfloor, the method comprising the steps of:
- determining the position of a void between said one or more tiles and said subfloor;
- drilling an injector hole of 1-2.5 mm in the filler material between tiles positioned above said void;
- providing an apparatus comprising:
   a) a needle-shaped injection nozzle with a hollow shaft and a hub; wherein said hub is threaded and adapted for being directly or indirectly fastened to the outlet of said cartridge, wherein the hollow shaft is configured as a needle of 1.0-2.5 mm in thickness;
   b) a cartridge with a water based polyvinyl acetate adhesive or a liquid cyanoacrylate adhesive in its lumen, said adhesivehaving a shear-thinning and thixotropic rheological behavior, said cartridge comprising a threaded outlet; and
   c) a caulking gun or the like adapted for forcing said adhesive out of the outlet of said cartridge;
- injecting said adhesive of said apparatus into said void via said injector hole and via said needle-shaped injection nozzle of said apparatus, said injection nozzle having a diameter corresponding to said injector hole;
- removing said injection nozzle from said injector hole to allow said adhesive to increase in viscosity; and
- allowing said adhesive to set.

In one or more embodiments, said water based polyvinyl acetate adhesive or liquid cyanoacrylate adhesive is preheated to a temperature of 15-30 degrees Celsius prior to injection. This operation secures that the adhesive can be forced out of the cartridge through the needle-shaped injection nozzle.

A second aspect according to claim 6 relates to an apparatus for use in the method according to the present invention, said apparatus comprising:
- an injection nozzle;
- a cartridge with a water based polyvinyl acetate adhesive or a liquid cyanoacrylate adhesive in its lumen, said adhesivehaving a shear-thinning and thixotropic rheological behavior, said cartridge comprising a threaded outlet; and
- a caulking gun or the like adapted for forcing said adhesive out of the outlet of said cartridge;

wherein said injection nozzle is needle-shaped with a hollow shaft and a hub;
wherein said hub is threaded and adapted for being directly or indirectly fastened to the outlet of said cartridge, wherein the hollow shaft is configured as a needle of 1.0-2.5 mm in thickness.

As used herein, the term "shear thinning" refers to the common property of non-Newtonian fluids where fluid viscosity decreases with increasing shear rate or shear stress. As used herein, the term "thixotropic" is used to describe an adhesive, which fluid viscosity decreases with increasing shear rate or shear stress, and then increases again when left standing.

The rheological properties of the adhesive for use in the present invention is of great importance. For the adhesive to flow easily into the void after being forced out of the needle, it should have a shear-thinning rheological behavior and more preferably a thixotropic rheological behavior. The present invention describes the use of a caulking gun to force the adhesive out of the cartridge and through a very thin needle of 1.0-2.5 mm in thickness. This operation provides sufficient shear stress to make the adhesive flow easily and fast into all areas of the void. When the adhesive rests, its fluid viscosity increases again and its properties as an adhesive are restored. Hence, the shear rate is induced by pumping, but could be combined by mixing, provided that a static mixer is introduced between the needle and cartridge. The shear rate will reduce the viscosity, allowing the adhesive to flow more easily. The pumping, optionally in combination with static mixing, is speculated, without being bound to it, to generate shear rates of from 100 to 10,000 second⁻¹. When the application is finished and the shear rate falls off to only that induced by gravity, the viscosity will build up again to help hold the adhesive in place until it has cured.

The caulking gun/sealant gun is a familiar tool to workers in the construction industry. It is a simple means of dispensing pastes from standard sized cartridges. The cartridge is secured in the gun; and squeezing or triggering the handle depresses a plunger at the base of the adhesive cartridge that forces the paste out through the cartridge nozzle. Guns are available for a range of standard size one or two component adhesive cartridges. The simplest guns are manually driven but pneumatically or motor driven systems are also available.

In one or more embodiments, the adhesive has a viscosity of less than 3,000 mPa*s when measured at 20° Celsius at a shear rate of 100 second⁻¹, and preferably within the range of 100-3,000 mPa*s when measured at 20° Celsius at a shear rate of 100 second⁻¹, and even more preferably within the range of 200-2,000 mPa*s when measured at 20° Celsius at a shear rate of 100 second⁻¹, such as within the range of 200-1,000 mPa*s when measured at 20° Celsius at a shear rate of 100 second⁻¹, preferably within the range of 400-800 mPa*s when measured at 20° Celsius at a shear rate of 100 second⁻¹. The viscosity may be measured by an Anton Paar Rheometer (Physica MCR 302) using a measuring bob and cup (system CC27). Adhesives with these characteristics are well known to the skilled person with the field of adhesives and are commercially available. However, the applicant has not been able to purchase a water based polyvinyl acetate adhesive with these characteristics and has adjusted a commercially available water based polyvinyl acetate adhesive with a filler material to obtain the correct viscosity. Suitable filler materials may be calcium carbonates, magnesium carbonates, calcium magnesium carbonates, magnesium silicates, or the like having a volume mean grain diameter d₅₀(vol) of less than 100 microns, preferably within the range of 1-50 microns, and more preferably within the range of 1-20 microns, e.g., within the range of 2-10 microns.

The value dₓ represents the diameter relative to which x % of the particles have diameters less than dx. The dx-values may be given in volume or weight percent. The d50(wt) value is thus the weight median particle size, i.e., 50 wt% of all grains are smaller than this particle size, and the d50(vol) value is the volume median particle size, i.e., 50 vol.% of all grains are smaller than this particle size. Volume median grain diameter dx(vol) was evaluated using a Malvern Mastersizer 3000 Laser Diffraction System. The measured values using a Malvern Mastersizer 3000 Laser Diffraction System, indicates a diameter value such that 50% or 98% by volume, respectively, of the particles have a diameter of less than this value. The raw data obtained by the measurement may be analyzed using the Mie theory, with a particle refractive index of 1.57 and an absorption index of 0.005.

The preferred type of adhesive for the present invention is a water based polyvinyl acetate adhesive that may be formulated as an emulsion of vinyl acetate polymers in water. The emulsion is formed by polymerization in water of vinyl monomers, predominantly vinyl acetate, a process known as emulsion polymerization. This type of adhesive is normally not used for adhering tiles to a surface but showed to be particularly suitable for filling voids between a tile and a concrete subfloor (or the like water absorbing surface) as the adhesive sets when the water diffuses into the concrete subfloor and coalescence of the polymers occur. The rheological properties of the adhesive may be controlled by using so-called "rheological control agents" or "thixotropes" as additives. Several commercially available thixotropes, such as fumed silica, talc, asbestos, modified bentonite, colloidal silica, and certain hydrated magnesium aluminum silicates, can be utilized to impart the desired rheological characteristics for the adhesive for use in the present invention. A preferred thixotrope is fumed silica. It has the advantages of being an effective rheological control agent, which will not undergo swelling, and which exhibits chemical inertness. The polyvinyl acetate adhesive may be polymerized with minor amounts of vinyl alcohol, resulting in free hydroxyl groups on the polymer. The free hydroxyl groups can also be formed by hydrolysis of the acetate groups. These hydroxyl groups offer sites for cross-linking. Cross-linking agents include strongly chelating metal salts, such as chromium complexes. In addition, other adhesive resins, such as ureaformaldehyde-resins, melamine formaldehyde resin, and isocyanates may be used to advantage as chemical cross-linkers. Cross-linked polyvinyl acetate adhesives are more rigid and have better moisture and heat resistance.

An alternative to the water based polyvinyl acetate adhesive, although less preferred, is a liquid cyanoacrylate adhesive, that is an enclosed cure adhesive, based on acrylic monomers that polymerizes into acrylic polymers in contact with alkaline surfaces, such as cement. The presence of surface moisture helps neutralize acidic stabilizers in the adhesive and promote the hardening reaction. The rheological properties of the adhesive may be controlled by using so-called "rheological control agents" or "thixotropes" as additives. Several commercially available thixotropes, such as fumed silica, talc, asbestos, modified bentonite, colloidal silica, and certain hydrated magnesium aluminum silicates, can be utilized to impart the desired rheological characteristics for the adhesive for use in the present invention. A preferred thixotrope is fumed silica. It has the advantages of being an effective rheological control agent, which will not undergo swelling, and which exhibits chemical inertness.

When compared to the injection nozzle disclosed in US9151066, the injection nozzle of the present invention is needle shaped. This difference is very important as the thin needle of 1.0-2.5 mm in thickness, and more preferably 1.0-1.5 mm in thickness secures that sufficient shear stress is provided to make the adhesive flow easily and fast into all areas of the void. This will not happen when using a conical tip disclosed in US9151066. The needle is preferably straight to avoid that the flow of adhesive is slowed down before reaching its destination. Preferably, the needle is made from metal, such as stainless steel.

In one or more embodiments, the apparatus further comprises a kit of injection nozzles of different thicknesses within the range of 1.1-2.4 mm.

In one or more embodiments, the needle-shaped injection nozzle has a blunt tip. This embodiment allows for a controlled and uniform flow of adhesive from the needle tip compared to a needle with a bevel. To avoid that the needle tip during insertion into the hole is clogged with filler material or material from the wall or subfloor, the injection nozzle preferably comprises a side port positioned at most 1-10 mm from the tip end, and more preferably 2-5 mm from the tip end. This position also secures that the adhesive may flow directly into the void below a tile as it corresponds to the height of the original glue layer. In one or more embodiments, the injection nozzle has a closed ended tip with one or more side ports positioned at most 1-10 mm from the tip end, and more preferably 2-5 mm from the tip end.

When using such relatively small needles as injection nozzles, they may become worn relatively fast. To avoid having to change the entire injection nozzle, it can be divided into a needle part and an adapter part, such as a threaded bushing, where only the needle part is to be replaced. This configuration is also suitable when there is a need for different types of needles for different types of work, depending on whether it is a wall or a flooring that needs to be repaired.

In one or more embodiments, the injection nozzle is adapted for being indirectly fastened to the outlet of said cartridge via an adapter having a first end and a second end, and wherein said adapter is threaded in both ends.

As used in the specification and the appended claims, the singular forms "a", "an", and "the" include plural referents unless the context clearly dictates otherwise. Ranges may be expressed herein as from "about" or "approximately" one particular value and/or to "about" or "approximately" another particular value. When such a range is expressed, another embodiment includes from the one particular value and/or to the other particular value. Similarly, when values are expressed as approximations, by use of the antecedent "about", it will be understood that the particular value forms another embodiment.

It should be noted that embodiments and features described in the context of one of the aspects of the present invention also apply to the other aspects of the invention.

The invention is described in more detail in the following detailed description of a preferred embodiment, with reference to the figures.

### Brief description of the figures

Figure 1 is a schematic drawing of a floor to be repaired.
Figure 2 shows a cross-sectional view of an injection nozzle, adapter, and adhesive cartridge according to specific embodiments of the present invention.
Figure 3 shows an adhesive cartridge to be inserted into a caulking gun according to specific embodiments of the present invention.

### References

- 110: Outline
- 120: Tile
- 130: Injector hole
- 140: Filler material line
- 150: Injection nozzle
- 160: Adapter
- 170: Cartridge
- 180: Gun

### Detailed Description of the Invention

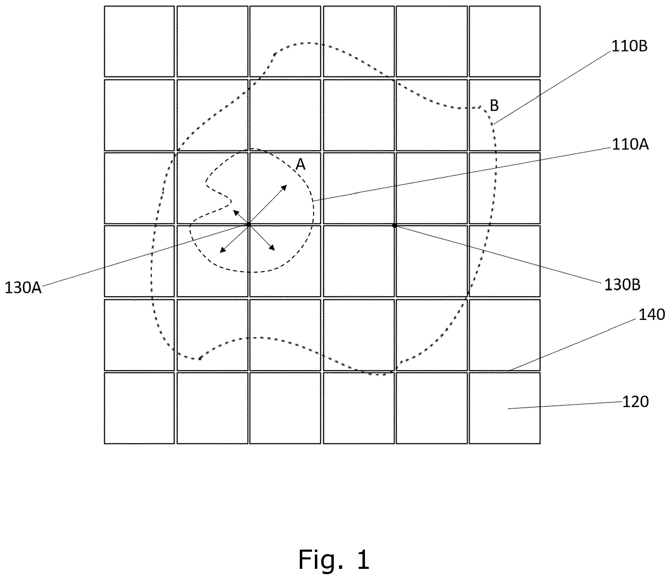

Figure 1 shows a tile floor to be repaired. At first the repairer will have to determine the location and extent of a separated area under the tile floor. Such areas may vary much in size as exemplified with area A and B. This is done by tapping the tiles 120 on the floor with a solid object (not shown), thereby finding the outline 110A, 110B of the separated area by sound. While tapping the outline of the separated area it can be marked by chalk or other removable material. The repairer would then select a starting point in the separated area and drill an injector hole 130A, 130B in the filler material line 140 between adjacent tiles 120. If the separated area is relatively large as exemplified with area B, it may be necessary to drill more than a single injector hole. However, due to the apparatus' construction of the present invention the adhesive flows very easily into the separated area, thereby obviating the need for drilling many injector holes. Before injecting the adhesive, the drilled injector hole is preferably cleaned from dust, e.g., by vacuum suction. Contrary to the method disclosed in US9151066 there is no need for drilling ventilation holes and there is no need for a seal or tight fit between the injector nozzle and the injector hole. This is because the injected adhesive flows readily from the injector hole and throughout the separated area as exemplified with arrows in area A. As the adhesive flows readily, and the lack of said tight fit, there is little risk of pressure increases resulting in the breakage of filler material lines or lifting of tiles in the separated area.

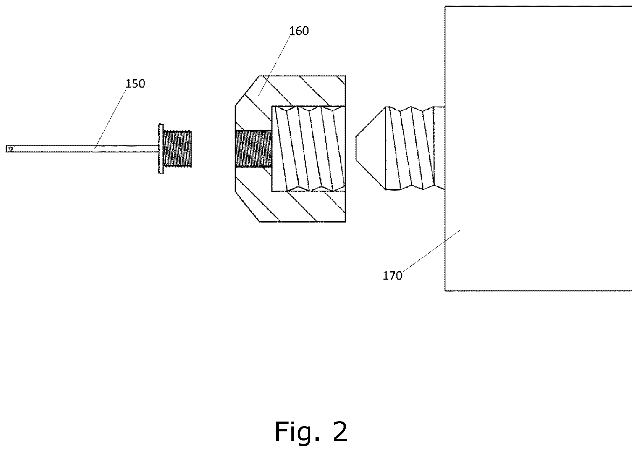

Figure 2 shows a cross-sectional view of a part of the system according to specific embodiments of the present invention, i.e., an injection nozzle 150, adapter 160, and cartridge 170. The injection nozzle 150 is adapted for being indirectly fastened to the outlet of the cartridge 170 via an adapter 160, here embodied as a threaded bushing. The adapter 160 is threaded in both ends.

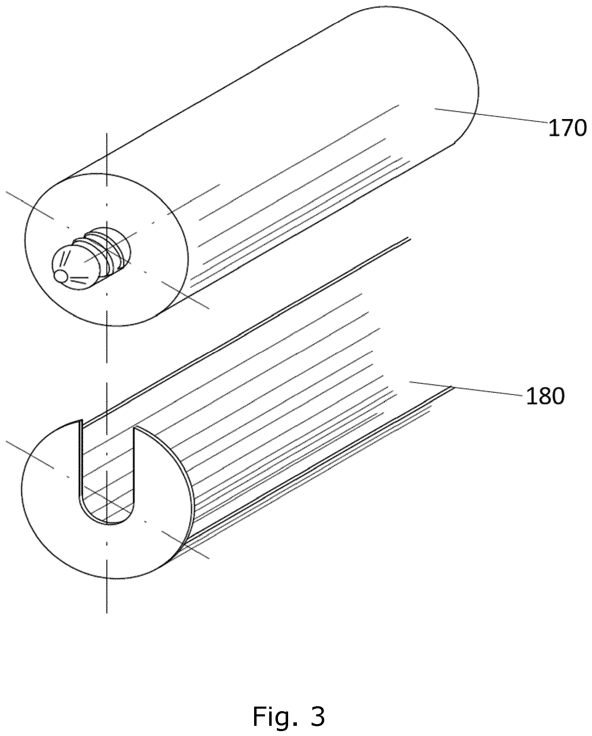

Figure 3 shows the cartridge 170 about to be inserted into a caulking gun 180 (only the front part is shown). The injection nozzle and adapter are not shown.

## Claims

1. A method for repairing a portion of a floor where one or more tiles have become separated from the underlying subfloor of concrete or the like, the method comprising the steps of:
- determining the position of a void between said one or more tiles and said subfloor;
- drilling an injector hole of 1-2.5 mm in the filler material between tiles positioned above said void;
- providing an apparatus comprising:
a) a needle-shaped injection nozzle with a hollow shaft and a hub; wherein said hub is threaded and adapted for being directly or indirectly fastened to the outlet of said cartridge, wherein the hollow shaft is configured as a needle of 1.0-2.5 mm in thickness;
b) a cartridge with a water based polyvinyl acetate adhesive or a liquid cyanoacrylate adhesive in its lumen, said adhesive having a shear-thinning and thixotropic rheological behavior, said cartridge comprising a threaded outlet; and
c) a caulking gun or the like adapted for forcing said adhesive out of the outlet of said cartridge;
- injecting said polyvinyl acetate adhesive or liquid cyanoacrylate adhesive of said apparatus into said void via said injector hole and via said needle-shaped injection nozzle of said apparatus, said injection nozzle having a diameter corresponding to said injector hole;
- removing said injection nozzle from said injector hole to allow said polyvinyl acetate adhesive or liquid cyanoacrylate adhesive to increase in viscosity; and
- allowing said polyvinyl acetate adhesive or liquid cyanoacrylate adhesive to set.

2. The method according to claim 1, wherein said adhesive is a water based polyvinyl acetate adhesive.

3. The method according to claim 1, wherein said adhesive is a liquid cyanoacrylate adhesive.

4. The method according to any one of the claims 1-3, wherein said adhesive is preheated to a temperature of 15-30 degrees Celsius prior to injection.

5. The method according to any one of the claims 1-4, wherein said adhesive has a viscosity of within the range of 400-800 mPa*s when measured at 20° Celsius at a shear rate of 100 second⁻¹.

6. An apparatus for use in the method according to any one of the claims 1-5, said apparatus comprising:
- an injection nozzle;
- a cartridge with a water based polyvinyl acetate adhesive or liquid cyanoacrylate adhesive in its lumen, said adhesive having a shear-thinning and thixotropic rheological behavior, said cartridge comprising a threaded outlet; and
- a caulking gun or the like adapted for forcing said adhesive out of the outlet of said cartridge;
wherein said injection nozzle is needle-shaped with a hollow shaft and a hub;
wherein said hub is threaded and adapted for being directly or indirectly fastened to the outlet of said cartridge, wherein the hollow shaft is configured as a needle of 1.0-2.5 mm in thickness.

7. The apparatus according to claim 6, further comprising an oven adapted for heating said cartridge to a temperature of 15-30 degrees Celsius.

8. The apparatus according to any one of the claims 6-7, wherein a static mixer is positioned between said needle and said cartridge.

9. The apparatus according to any one of the claims 6-8, wherein said injection nozzle has a closed ended tip with one or more side ports positioned at most 1-10 mm from the tip end.

10. The apparatus according to any one of the claims 6-9, wherein said injection nozzle is adapted for being indirectly fastened to the outlet of said cartridge via an adapter, such as a threaded bushing, having a first end and a second end, and wherein said adapter is threaded in both ends.

11. The apparatus according to any one of the claims 6-10, wherein said adhesive has a viscosity of within the range of400-800 mPa*s when measured at 20° Celsius at a shear rate of 100 second⁻¹.

12. The apparatus according to any one of the claims 6-11, wherein said adhesive has a viscosity within the range of 200-2,000 mPa*s when measured at 20° Celsius at a shear rate of 100 second⁻¹.

13. The apparatus according to any one of the claims 6-12, wherein said adhesive is a water based polyvinyl acetate adhesive.

14. The apparatus according to any one of the claims 6-12, wherein said adhesive is a liquid cyanoacrylate adhesive.

## Patentansprüche

1. Verfahren zum Reparieren eines Abschnitts eines Bodens, bei dem eine oder mehrere Fliesen von dem darunterliegenden Unterboden aus Beton oder dergleichen getrennt wurden, wobei das Verfahren die folgenden Schritte umfasst:
- Bestimmen der Position eines Hohlraums zwischen der einen oder den mehreren Fliesen und dem Unterboden;
- Bohren eines Einspritzlochs von 1-2,5 mm in das Füllmaterial zwischen den über dem Hohlraum positionierten Fliesen;
- Bereitstellen einer Vorrichtung, die Folgendes umfasst:
a) eine nadelförmige Einspritzdüse mit einer Hohlwelle und einer Nabe; wobei die Nabe ein Gewinde aufweist und dazu eingerichtet ist, direkt oder indirekt an dem Auslass der Kartusche befestigt zu werden, wobei die Hohlwelle als eine Nadel mit einer Dicke von 1,0-2,5 mm ausgebildet ist;
b) eine Kartusche mit einem wasserbasierten Polyvinylacetat-Klebstoff oder einem flüssigen Cyanacrylat-Klebstoff in deren Lumen, wobei der Klebstoff ein scherverdünnendes und thixotropes rheologisches Verhalten aufweist, wobei die Kartusche einen Gewindeauslass umfasst; und
c) eine Dichtkittpistole oder dergleichen, die dazu eingerichtet ist, den Klebstoff aus dem Auslass der Kartusche zu drängen;
- Einspritzen des Polyvinylacetat-Klebstoffs oder flüssigen Cyanacrylat-Klebstoffs der Vorrichtung in den Hohlraum über das Einspritzloch und über die nadelförmige Einspritzdüse der Vorrichtung, wobei die Einspritzdüse einen Durchmesser aufweist, der dem Einspritzloch entspricht;
- Entfernen der Einspritzdüse aus dem Einspritzloch, um eine Viskositätszunahme des Polyvinylacetat-Klebstoffs oder des flüssigen Cyanacrylat-Klebstoffs zu ermöglichen; und
- Ermöglichen, dass sich der Polyvinylacetat-Klebstoff oder flüssige Cyanacrylat-Klebstoffs verfestigt.

2. Verfahren nach Anspruch 1, wobei der Klebstoff ein wasserbasierter Polyvinylacetat-Klebstoff ist.

3. Verfahren nach Anspruch 1, wobei der Klebstoff ein flüssiger Cyanacrylat-Klebstoff ist.

4. Verfahren nach einem der Ansprüche 1-3, wobei der Klebstoff vor dem Einspritzen auf eine Temperatur von 15-30 Grad Celsius vorgewärmt wird.

5. Verfahren nach einem der Ansprüche 1-4, wobei der Klebstoff eine Viskosität im Bereich von 400-800 mPa*s aufweist, gemessen bei 20 ° Celsius bei einer Scherrate von 100 Sekunden⁻¹.

6. Vorrichtung zur Verwendung in dem Verfahren nach einem der Ansprüche 1-5, wobei die Vorrichtung Folgendes umfasst:
- eine Einspritzdüse;
- eine Kartusche mit einem wasserbasierten Polyvinylacetat-Klebstoff oder einem flüssigen Cyanacrylat-Klebstoff in deren Lumen, wobei der Klebstoff ein scherverdünnendes und thixotropes rheologisches Verhalten aufweist, wobei die Kartusche einen Gewindeauslass umfasst; und
- eine Dichtkittpistole oder dergleichen, die dazu eingerichtet ist, den Klebstoff aus dem Auslass der Kartusche zu drängen;
wobei die Einspritzdüse nadelförmig mit einer Hohlwelle und einer Nabe ist;
wobei die Nabe ein Gewinde aufweist und dazu eingerichtet ist, direkt oder indirekt an dem Auslass der Kartusche befestigt zu werden, wobei die Hohlwelle als eine Nadel mit einer Dicke von 1,0-2,5 mm ausgebildet ist.

7. Vorrichtung nach Anspruch 6, ferner umfassend einen Ofen, der zum Erwärmen der Kartusche auf eine Temperatur von 15-30 Grad Celsius eingerichtet ist.

8. Vorrichtung nach einem der Ansprüche 6-7, wobei ein statischer Mischer zwischen der Nadel und der Kartusche positioniert ist.

9. Vorrichtung nach einem der Ansprüche 6-8, wobei die Einspritzdüse eine Spitze mit geschlossenem Ende mit einer oder mehreren Seitenöffnungen aufweist, die höchstens 1-10 mm von dem Spitzenende positioniert sind.

10. Vorrichtung nach einem der Ansprüche 6-9, wobei die Einspritzdüse dazu eingerichtet ist, über einen Adapter, wie etwa eine Gewindebuchse, der ein erstes Ende und ein zweites Ende aufweist, indirekt an dem Auslass der Kartusche befestigt zu werden, und wobei der Adapter an beiden Enden ein Gewinde aufweist.

11. Vorrichtung nach einem der Ansprüche 6-10, wobei der Klebstoff eine Viskosität im Bereich von 400-800 mPa*s aufweist, gemessen bei 20 ° Celsius bei einer Scherrate von 100 Sekunden⁻¹.

12. Vorrichtung nach einem der Ansprüche 6-11, wobei der Klebstoff eine Viskosität im Bereich von 200-2.000 mPa*s aufweist, gemessen bei 20 ° Celsius bei einer Scherrate von 100 Sekunden⁻¹.

13. Vorrichtung nach einem der Ansprüche 6-12, wobei der Klebstoff ein wasserbasierter Polyvinylacetat-Klebstoff ist.

14. Vorrichtung nach einem der Ansprüche 6-12, wobei der Klebstoff ein flüssiger Cyanacrylat-Klebstoff ist.

## Revendications

1. Procédé de réparation d'une partie d'un plancher où un ou plusieurs carreaux se sont détachés du sous-plancher sous-jacent en béton ou similaire, le procédé comprenant les étapes de :
- détermination de la position d'un vide entre lesdits une ou plusieurs carreaux et ledit sous-plancher ;
- perçage d'un trou d'injecteur de 1 à 2,5 mm dans le matériau de remplissage entre les carreaux positionnés au-dessus dudit vide ;
- fourniture d'un appareil comprenant :
a) une buse d'injection en forme d'aiguille avec une tige creuse et un moyeu ; dans laquelle ledit moyeu est fileté et adapté pour être fixé directement ou indirectement à la sortie de ladite cartouche, dans laquelle la tige creuse est configurée comme une aiguille de 1,0 à 2,5 mm d'épaisseur ;
b) une cartouche avec un adhésif à base d'acétate de polyvinyle à base d'eau ou un adhésif à base de cyanoacrylate liquide dans sa lumière, ledit adhésif ayant un comportement rhéologique rhéofluidifiant et thixotrope, ladite cartouche comprenant une sortie filetée ; et
c) un pistolet à calfeutrer ou similaire adapté pour forcer ledit adhésif à sortir de la sortie de ladite cartouche ;
- injection dudit adhésif à base d'acétate de polyvinyle ou dudit adhésif à base de cyanoacrylate liquide dudit appareil dans ledit vide par l'intermédiaire dudit trou d'injecteur et par l'intermédiaire de ladite buse d'injection en forme d'aiguille dudit appareil, ladite buse d'injection ayant un diamètre correspondant audit trou d'injecteur ;
- retrait de ladite buse d'injection dudit trou d'injecteur pour permettre audit adhésif à base d'acétate de polyvinyle ou adhésif à base de cyanoacrylate liquide d'augmenter sa viscosité ; et
- durcissement dudit adhésif à base d'acétate de polyvinyle ou adhésif à base de cyanoacrylate liquide.

2. Procédé selon la revendication 1, dans lequel ledit adhésif est un adhésif à base d'acétate de polyvinyle à base d'eau.

3. Procédé selon la revendication 1, dans lequel ledit adhésif est un adhésif à base de cyanoacrylate liquide.

4. Procédé selon l'une quelconque des revendications 1 à 3, dans lequel ledit adhésif est préchauffé à une température de 15 à 30 degrés Celsius avant l'injection.

5. Procédé selon l'une quelconque des revendications 1 à 4, dans lequel ledit adhésif a une viscosité dans la plage de 400 à 800 mPa*s lorsqu'elle est mesurée à 20° Celsius à un taux de cisaillement de 100 secondes⁻¹.

6. Appareil destiné à être utilisé dans le procédé selon l'une quelconque des revendications 1 à 5, ledit appareil comprenant :
- une buse d'injection ;
- une cartouche avec un adhésif à base d'acétate de polyvinyle à base d'eau ou un adhésif à base de cyanoacrylate liquide dans sa lumière, ledit adhésif ayant un comportement rhéologique rhéofluidifiant et thixotrope, ladite cartouche comprenant une sortie filetée ; et
- un pistolet à calfeutrer ou similaire adapté pour forcer ledit adhésif à sortir de la sortie de ladite cartouche ;
dans lequel ladite buse d'injection est en forme d'aiguille avec une tige creuse et un moyeu ;
dans lequel ledit moyeu est fileté et adapté pour être fixé directement ou indirectement à la sortie de ladite cartouche, dans lequel la tige creuse est configurée comme une aiguille de 1,0 à 2,5 mm d'épaisseur.

7. Appareil selon la revendication 6, comprenant également un four adapté pour chauffer ladite cartouche à une température de 15 à 30 degrés Celsius.

8. Appareil selon l'une quelconque des revendications 6 à 7, dans lequel un mélangeur statique est positionné entre ladite aiguille et ladite cartouche.

9. Appareil selon l'une quelconque des revendications 6 à 8, dans lequel ladite buse d'injection comporte une pointe à extrémité fermée avec un ou plusieurs orifices latéraux positionnés à au plus 1 à 10 mm de l'extrémité de la pointe.

10. Appareil selon l'une quelconque des revendications 6 à 9, dans lequel ladite buse d'injection est adaptée pour être fixée indirectement à la sortie de ladite cartouche par l'intermédiaire d'un adaptateur, tel qu'une douille filetée, ayant une première extrémité et une seconde extrémité, et dans lequel ledit adaptateur est fileté aux deux extrémités.

11. Appareil selon l'une quelconque des revendications 6 à 10, dans lequel ledit adhésif a une viscosité dans la plage de 400 à 800 mPa*s lorsqu'elle est mesurée à 20° Celsius à un taux de cisaillement de 100 secondes⁻¹.

12. Appareil selon l'une quelconque des revendications 6 à 11, dans lequel ledit adhésif a une viscosité dans la plage de 200 à 2 000 mPa*s lorsqu'elle est mesurée à 20° Celsius à un taux de cisaillement de 100 secondes⁻¹.

13. Appareil selon l'une quelconque des revendications 6 à 12, dans lequel ledit adhésif est un adhésif à base d'acétate de polyvinyle à base d'eau.

14. Appareil selon l'une quelconque des revendications 6 à 12, dans lequel ledit adhésif est un adhésif à base de cyanoacrylate liquide.
